# EUROPEAN PATENT APPLICATION

(11) **EP 3 143 909 A1**
(43) Date of publication of application: **22.03.2017**
(21) Application number: 15185508.7
(22) Date of filing: 16.09.2015
(51) Int. Cl.: A47G 23/06, B29C 45/14

(54) **FOOD TRAY**

(71) Applicant: Hu, Hsi-Yu, Tainan City 712 (TW)
(72) Inventor: Hu, Hsi-Yu, Tainan City 712 (TW)
(74) Representative: Jannig, Peter

(57) **Abstract**

A food tray (10) includes a metallic tray member (12) and a cushion body (14). The tray member (12) includes a tray bottom (16) and a disk body (18) extending upward from a rim of the tray bottom (16). The tray bottom's internal surface (20) and the disk body's inner surface (24) define a space (28) in which foods are carried. The cushion body (14) made of flexible or soft material has a bottom portion (30) and a peripheral portion (32) extending upward from a rim (50) of the bottom portion (30). The cushion body (14) wraps an external surface (22) of the tray bottom (16) of the tray member (12) and an outer surface (26) of the disk body (18) in an injection molding process so that the cushion body (14) and the tray member (12) integrally join together. The food tray (10) can be attached and positioned on a supporting object (52) but neither overturned nor broken under effect of an external force.

## Description

### BACKGROUND OF THE INVENTION

The present invention relates to a food tray and, more particularly, to a non-slip tray on which foods are carried.

Trays on which foods are carried are indispensable household utensils in a kitchen. In general, a food tray available in the market is made of heat-resistant ceramic material and has a circular protrusion at the bottom portion. With the circular protrusion as a cushion for support, a tray which is placed on a slippery desktop (or on a table stained by water particularly) may be overturned and broken under the effect of an external force and foods on the tray are wasted. Moreover, when hot foods are carried on a food tray made of plastic, the food tray will be thermally decomposed by heating for release of toxin which imperils human beings chronically.

### BRIEF SUMMARY OF THE INVENTION

It is an objective of the present invention to provide a food tray without drawbacks of conventional ceramic or plastic trays. The food tray of the present invention is characteristic of advantages such as heat-resistant, unbreakable, oil-free and washable. Furthermore, the food tray of the present invention can be positioned on a supporting object but neither overturned nor broken under effect of an external force.

To achieve this and other objectives, a food tray of the present invention includes a tray member and a cushion body. The tray member is made of metal material and includes a tray bottom and a disk body extending upward from a rim of the tray bottom. The tray bottom has an internal surface and an external surface opposite to the internal surface, and the disk body has an inner surface and an outer surface opposite to the inner surface. The internal surface of the tray bottom and the inner surface of the disk body define a space in which foods are adapted to be received. The cushion body includes a bottom portion and a peripheral portion extending upward from a rim of the bottom portion. The bottom portion has an upper surface and a lower surface opposite to the upper surface, and the peripheral portion has an inner face and an outer face opposite to the inner face. The cushion body wraps the external surface of the tray bottom and the outer surface of the disk body in an injection molding process so that the upper surface of the bottom portion and the inner face of the peripheral portion join the external surface of the tray bottom and the outer surface of the disk body, respectively.

Preferably, the tray member is made of stainless steel, and the cushion body is made of silicone.

In a preferred form, a central concave portion and a plurality of grooves are provided in the lower surface of the bottom portion of the cushion body. Each of the grooves extends to the rim of the bottom portion of the cushion body from the concave portion along a radial direction of the lower surface.

In a preferred form, the peripheral portion of the cushion body has an upper rim which is level with an upper rim of the disk body of the tray member.

The present invention will become clearer in light of the following detailed description of an illustrative embodiment of this invention described in connection with the drawings.

### DESCRIPTION OF THE DRAWINGS

The illustrative embodiment may best be described by reference to the accompanying drawings where:
FIG. 1 is an exploded, perspective view of a food tray of the present invention.
FIG. 2 is another exploded, perspective view of the food tray of the present invention.
FIG. 3 is a perspective view of the food tray of FIG. 2.
FIG. 4 is a plan view of the food tray of FIG. 3.
FIG. 5 is a partial, sectional view of the food tray of FIG. 4.
FIG. 6 is a schematic view illustrating the food tray of FIG. 3 placed on a supporting object.

### DETAILED DESCRIPTION OF THE INVENTION

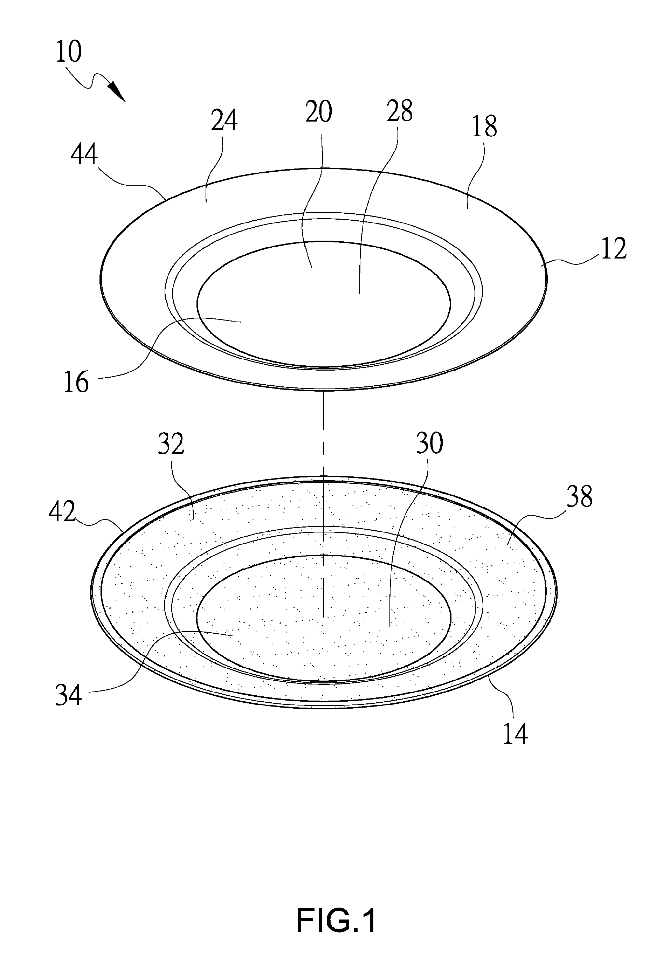

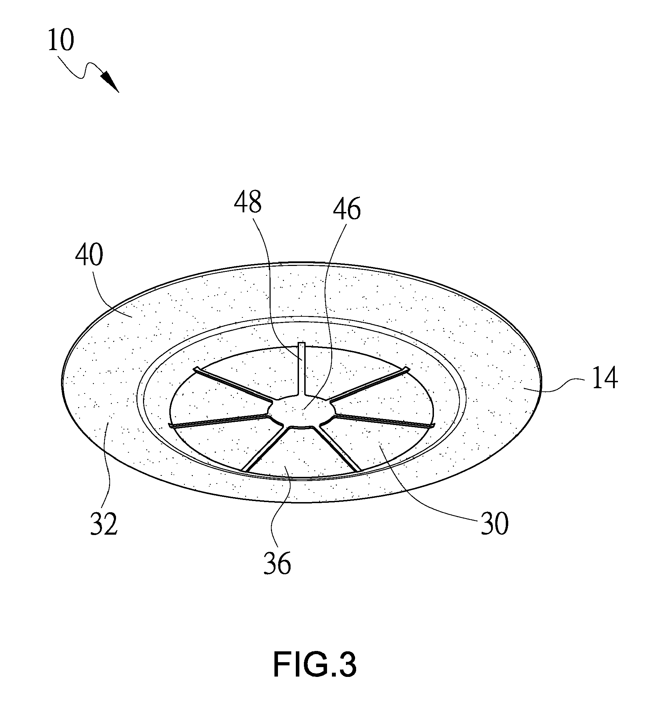

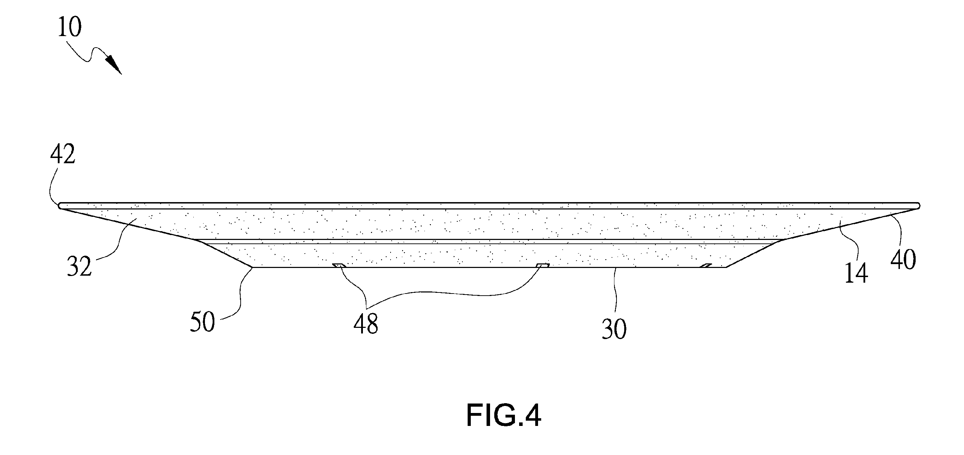

A food tray 10 according to an embodiment of the present invention is shown in FIGS. 1 through 5 of the drawings and includes a tray member 12 and a cushion body 14. The tray member 12 is made of metal material such as stainless steel and includes a tray bottom 16 and an annular disk body 18 which extends upward from a rim of the tray bottom 16. The tray bottom 16 has an internal surface 20 and an external surface 22 opposite to the internal surface 20. The disk body 18 has an inner surface 24 and an outer surface 26 opposite to the inner surface 24. Both the internal surface 20 of the tray bottom 16 and the inner surface 24 of the disk body 18 define a space 28 in which foods are received.

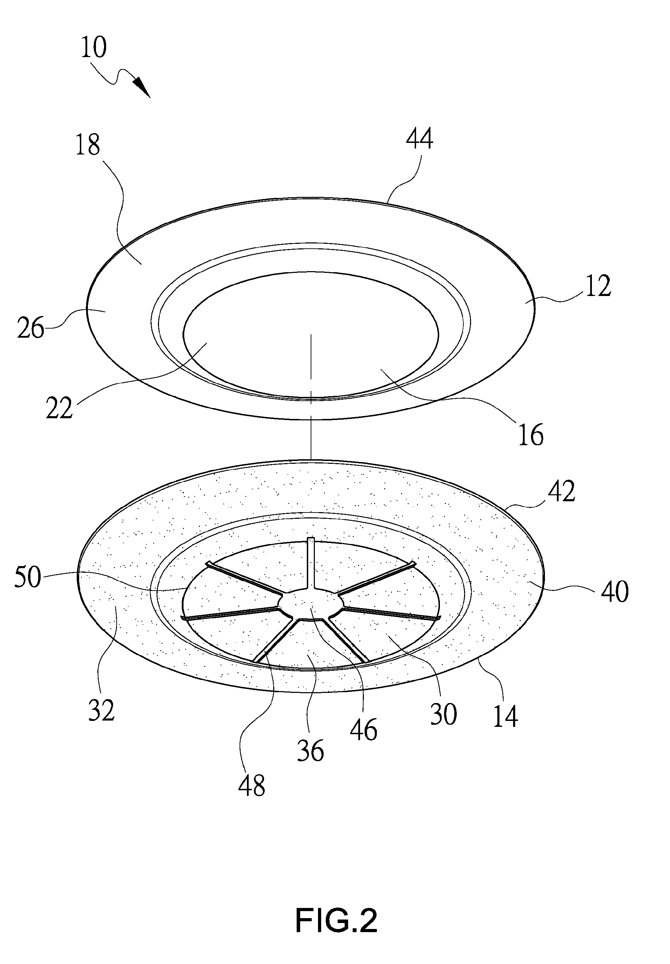

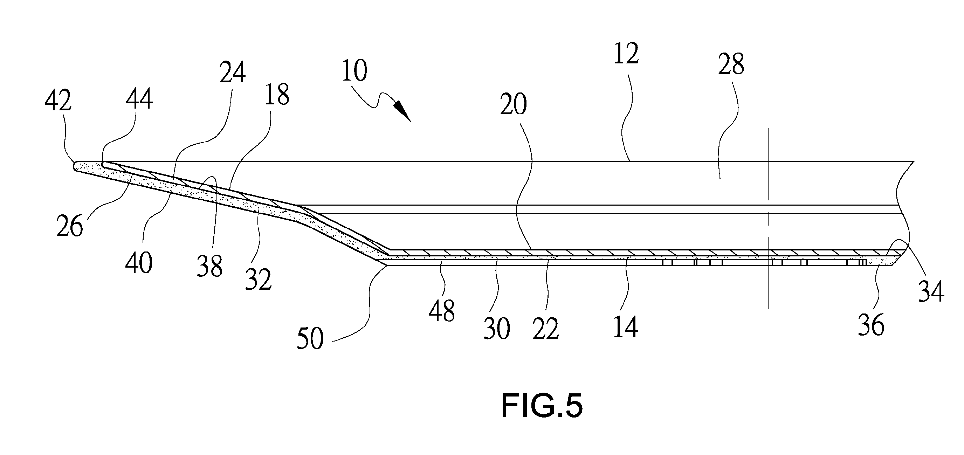

The cushion body 14 is made of flexible or soft material such as silicone and matches the tray member 12 in shape. The cushion body 14, which is nearly round, includes a bottom portion 30 and a peripheral portion 32 which extends upward from a rim 50 of the bottom portion 30. The bottom portion 30 has an upper surface 34 and a lower surface 36 opposite to the upper surface 34. The peripheral portion 32 has an inner face 38 and an outer face 40 opposite to the inner face 38. The upper surface 34 of the bottom portion 30 and the inner face 38 of the peripheral portion 32 respectively join the external surface 22 of the tray bottom 16 and the outer surface 26 of the disk body 18. In this embodiment, the cushion body 14 wraps the external surface 22 of the tray bottom 16 and the outer surface 26 of the disk body 18 of the tray member 12 in an injection molding process, so that the cushion body 14 and the tray member 12 integrally join together. Furthermore, the peripheral portion 32 has an upper rim 42 which is level with an upper rim 44 of the disk body 18 (see FIG. 5). In this embodiment, at the lower surface 36 of the bottom portion 30 of the cushion body 14 is provided with a central concave portion 46 and a plurality of grooves 48 which radially extend to a rim 50 of the bottom portion 30 from the concave portion 46 as a center (see FIG. 2). Namely, each of the grooves 48 extends to the rim 50 of the bottom portion 30 from the concave portion 46 along a radial direction of the lower surface 36.

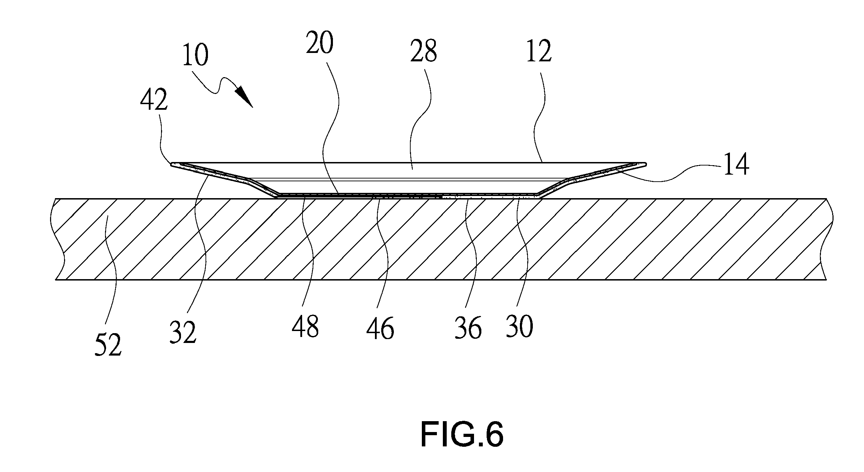

FIG. 6 illustrates the food tray 10 of the present invention is placed on a supporting object 52 (such as a desktop). With the cushion body 14 externally wrapping the tray member 12 (wrapping the external surface 22 of the tray bottom 16 as well as the outer surface 26 of the disk body 18), the tray member 12 is securely supported. Moreover, the concave portion 46 in the lower surface 36 of the cushion body 14 contributes to adherence by which the food tray 10 placed on the slippery supporting object 52 or impacted under effect of an external force is not overturned. In addition, the food tray 10 does not slip on the supporting object 52 stained by water when water accumulating in the concave portion 46 is guided to the rim 50 of the bottom portion 30 through the grooves 48 and does not remain on the bottom portion 30 of the cushion body 14. Further, the tray member 12 of the present invention made of stainless steel is heat-resistant and unbreakable. When a plurality of food trays 10 are erected side by side for storage, the food trays 10 can be dried easily because of water in the bottom portions 30 of the cushion bodies 14 drained from the grooves 48.

The scope of the invention is to be indicated by the appended claims, rather than by the foregoing description, and all changes which come within the meaning and range of equivalency of the claims are intended to be embraced therein.

## Claims

1. A food tray (10) comprising:
a tray member (12) made of metal material and including a tray bottom (16) and a disk body (18) extending upward from a rim of the tray bottom (16), with the tray bottom (16) having an internal surface (20) and an external surface (22) opposite to the internal surface (20), with the disk body (18) having an inner surface (24) and an outer surface (26) opposite to the inner surface (24), with the internal surface (20) of the tray bottom (16) and the inner surface (24) of the disk body (18) defining a space (28) in which foods are adapted to be received; and
a cushion body (14) including a bottom portion (30) and a peripheral portion (32) extending upward from a rim (50) of the bottom portion (30), with the bottom portion (30) having an upper surface (34) and a lower surface (36) opposite to the upper surface (34), with the peripheral portion (32) having an inner face (38) and an outer face (40) opposite to the inner face (38), wherein the cushion body (14) wraps the external surface (22) of the tray bottom (16) and the outer surface (26) of the disk body (18) in an injection molding process, with the upper surface (34) of the bottom portion (30) and the inner face (38) of the peripheral portion (32) respectively joining the external surface (22) of the tray bottom (16) and the outer surface (26) of the disk body (18).

2. The food tray according to claim 1, wherein a central concave portion (46) and a plurality of grooves (48) are provided in the lower surface (36) of the bottom portion (30) of the cushion body (14), with each of the grooves (48) extending to the rim (50) of the bottom portion (30) of the cushion body (14) from the concave portion (46) along a radial direction of the lower surface (36).

3. The food tray according to claim 1, wherein the tray member (12) is made of stainless steel, with the cushion body (14) made of silicone.

4. The food tray according to claim 2, wherein the tray member (12) is made of stainless steel, with the cushion body (14) made of silicone.

5. The food tray according to claim 2, wherein the peripheral portion (32) of the cushion body (14) has an upper rim (42) which is level with an upper rim (44) of the disk body (18) of the tray member (12).
